# DEMANDE DE BREVET EUROPEEN

(11) **EP 1 603 043 A2**
(43) Date de publication de la demande: **07.12.2005**
(21) Numéro de dépôt: 05104816.3
(22) Date de dépôt: 02.06.2005
(51) Int. Cl.: G06F 11/28

(54) **Procédé et système de test de l'atomicité de commandes exécutées par un microprocesseur**

(30) Priorité: 02.06.2004 FR 0451088
(71) Demandeur: PROTON WORLD INTERNATIONAL N.V., 1930 ZAVENTEM (BE)
(72) Inventeur: FONTAINE, Paul, 3020, WINKSELE (BE)
(74) Mandataire: de Beaumont, Michel

(57) **Abrégé**

L'invention concerne un procédé et un système de vérification du caractère atomique d'au moins une commande exécutée par un microprocesseur d'un élément électronique comprenant au moins une mémoire non volatile réinscriptible, consistant à : choisir (20) une commande principale (31) incluant au moins une mise à jour d'au moins une donnée (DATA) impliquant plusieurs opérations d'écriture dans la mémoire non volatile ; exécuter (22) plusieurs fois cette commande ; affecter (INTERRUPT) chaque exécution dans une des opérations d'écriture, en choisissant une opération différente à chaque fois ; et vérifier (27), après chaque affectation, la cohérence de la donnée dans la mémoire non volatile par rapport à au moins un état autorisé prédéterminé.

## Description

La présente invention concerne le domaine des micro-contrôleurs embarqués dans des éléments électroniques et, plus particulièrement, la vérification du caractère atomique des commandes ou transactions (suites d'instructions) exécutées par ce microcontrôleur.

Le caractère atomique d'une transaction signifie qu'une ou plusieurs variables mises en oeuvre par cette transaction ne risquent pas d'être fournies avec un état quelconque en cas d'interruption de cette transaction. Le cas le plus simple est une variable ayant un état initial et un état final. L'atomicité d'une transaction mettant en oeuvre cette variable signifie alors que, même en cas d'interruption de la transaction, la variable ne risque pas d'être fournie dans un état intermédiaire.

Un exemple d'application de la présente invention est le domaine des cartes à puce avec ou sans contacts équipés d'un microcontrôleur.

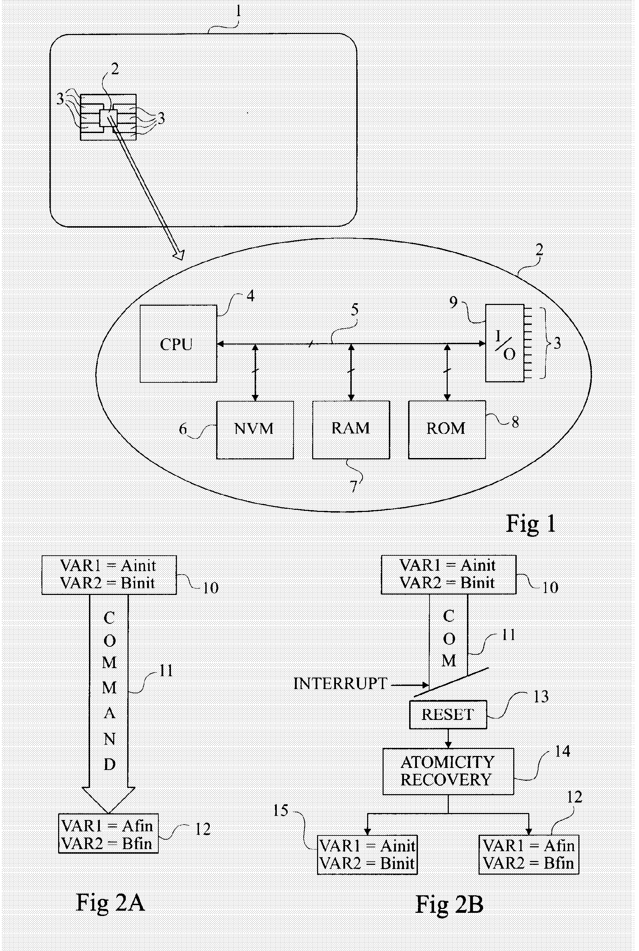

La figure 1 représente, de façon schématique, une carte 1 à puce 2 du type auquel s'applique la présente invention. Dans l'exemple de la figure 1, la carte à puce est une carte à contacts 3. Toutefois, la présence ou l'absence de contact ne modifie en rien l'invention. Dans le cas d'une carte à puce sans contact, les plots métalliques 3 de reprise de contacts sont remplacés ou complétés par une antenne d'un circuit oscillant pour communiquer avec une borne émettant un champ électromagnétique.

Comme l'illustre la figure 1, une puce 2 à microcontrôleur comprend essentiellement une unité centrale de traitement 4 communiquant, par l'intermédiaire d'un ou plusieurs bus 5, avec des mémoires parmi lesquelles, notamment, une mémoire 6 non volatile réinscriptible (NVM), par exemple, du type E²PROM. La puce 2 comporte également une mémoire vive 7 (RAM) pour exécuter les calculs courants et une mémoire morte 8 (ROM) contenant généralement les programmes exécutés par l'unité centrale 4. Enfin, l'unité centrale 4 est également reliée (dans cet exemple par le bus 5) à un circuit 9 d'entrée-sortie (I/O) qui est par ailleurs ici relié aux contacts 3. Dans le cas d'une puce sans contact (transpondeur électromagnétique) le circuit d'entrée-sortie module une porteuse et se trouve donc relié au circuit oscillant formant antenne.

Bien entendu, la carte à puce (plus généralement, l'élément électronique comprenant le microcontrôleur embarqué) peut comprendre d'autres composants et circuits selon les applications.

Les figures 2A et 2B illustrent, de façon très schématique, le caractère atomique d'une commande exécutée par un microcontrôleur. La figure 2A illustre le déroulement de la commande sans interruption. La figure 2B illustre ce déroulement en présence d'une interruption. L'interruption est généralement, dans le cas d'une carte à puce à contacts, une disparition de l'alimentation du microcontrôleur. Plus généralement, il s'agit de n'importe quelle perturbation entraînant un dysfonctionnement du microcontrôleur et provoquant sa réinitialisation.

Dans l'exemple de la figure 2A, on suppose une commande mettant en oeuvre deux variables VAR1 et VAR2 ayant respectivement des états initiaux Ainit et Binit et devant prendre, en fin d'exécution de la commande, des états finaux Afin et Bfin.

Les variables VAR1 et VAR2 sont stockées dans la mémoire non volatile 6. Au début de l'exécution de la commande (bloc 10), les variables VAR1 et VAR2 sont dans leurs états initiaux respectifs Ainit et Binit. En supposant que la commande (bloc 11, COMMAND) s'exécute normalement, la mémoire non volatile contient, en fin d'exécution pour les variables VAR1 et VAR2, leurs états finaux respectifs (bloc 12).

Dans le cas (figure 2B) où une interruption INTERRUPT se produit au cours de l'exécution de la commande 11, par exemple par disparition de l'alimentation de la carte à puce, une procédure spécifique est alors mise en oeuvre.

Cette procédure consiste, lors de la réinitialisation (bloc 13, RESET) suite à la remise sous tension de la carte, en une récupération de l'atomicité (bloc 14, ATOMICITY RECOVERY) de la transaction. Cette procédure conduit dans cet exemple à retrouver, dans la mémoire non volatile, soit les états finaux (bloc 12) des variables, soit leurs états initiaux (bloc 15).

Dans l'exemple ci-dessus, on suppose que, pour la commande considérée, la transaction est considérée comme atomique pourvu que la mise à jour des variables A et B soit effectuée pour les deux variables ou pas du tout. Par conséquent, un état intermédiaire dans lequel une seule des deux variables est mise à jour est considéré comme un état invalide ou non autorisé. On notera que la mise à jour d'une variable ou donnée s'effectue en pratique par une ou plusieurs opérations d'écriture dans la mémoire non volatile.

Des états intermédiaires peuvent le cas échéant être considérés comme cohérents ou autorisés. Par exemple, en supposant une transaction traitant quatre variables A, B, C et D réparties en deux groupes, un respect du caractère atomique de la transaction peut consister en une mise à jour des variables deux à deux. Dans ce cas, quatre situations sont considérées comme logiquement cohérentes : les quatre variables A, B, C et D ont leurs valeurs initiales (aucune mise à jour) ; les quatre variables A, B, C et D ont leurs valeurs finales (mise à jour correcte) ; les variables A et B ont leurs valeurs finales et les variables C et D ont leurs valeurs initiales ; et les variables C et D ont leurs valeurs finales tandis que les variables A et B ont leurs valeurs initiales.

Pour que le caractère atomique de la transaction soit respecté, il faut que les états des variables dans la mémoire non-volatile et leur combinaison correspondent à des états considérés comme logiquement cohérents. Il faut donc qu'en cas d'interruption de la transaction, le processeur soit capable de reconstituer l'un des états ou combinaisons cohérents.

De nombreuses techniques de récupération de l'atomicité de transaction existent. Par exemple, le brevet américain n° 6 535 997 décrit un processeur d'exécution de transactions de données entre un système externe et une carte à puce dans lesquels est mis en oeuvre une procédure de récupération du caractère atomique de la transaction.

Un problème qui se pose est de vérifier l'efficacité de telles procédures de récupération d'atomicité de transactions.

Une technique connue consiste à interrompre l'alimentation de la carte à puce de façon répétitive et aléatoire, et à s'assurer que les états logiquement cohérents soient toujours observés à la remise sous tension.

Un inconvénient d'une telle méthode est que, même en multipliant les opérations de test, elle n'apporte aucune garantie de fiabilité et n'est que statistique.

De plus, la multiplication des opérations de test entraîne une durée de test souvent rédhibitoire. Cet inconvénient est encore accru par le nombre important de commandes à tester.

Une autre difficulté est que les techniques de test classiques requièrent une mise hors tension de la puce à chaque test et interdisent un test par simulation.

La présente invention vise à permettre la vérification du caractère atomique de transactions ou commandes exécutées par un microprocesseur d'un élément électronique, par exemple, une carte à puce. L'invention vise plus particulièrement à vérifier l'efficacité du processus de récupération d'état(s) considéré(s) comme logiquement cohérent(s) que met en oeuvre le microcontrôleur de l'élément électronique.

L'invention vise également à proposer une solution compatible avec les systèmes de gestion de cartes à puce.

L'invention vise également à proposer une solution qui minimise le temps de vérification tout en fournissant un résultat fiable en cas de test réussi.

Pour atteindre ces objets ainsi que d'autres, la présente invention prévoit un procédé de vérification du caractère atomique d'au moins une commande exécutée par un microprocesseur d'un élément électronique comprenant au moins une mémoire non volatile réinscriptible, consistant à :
choisir une commande principale incluant au moins une mise à jour d'au moins une donnée impliquant plusieurs opérations d'écriture dans la mémoire non volatile ;
exécuter plusieurs fois cette commande ;
affecter chaque exécution dans une des opérations écriture, en choisissant une opération différente à chaque fois ; et
vérifier, après chaque affectation, la cohérence de la donnée dans la mémoire non volatile par rapport à au moins un état autorisé prédéterminé.

Selon un mode de mise en oeuvre de la présente invention, l'étape de vérification est effectuée à l'issue d'un processus de récupération d'atomicité mis en oeuvre par le microprocesseur.

Selon un mode de mise en oeuvre de la présente invention, les opérations d'écritures affectées sont choisies successivement dans l'ordre de leur apparition dans l'exécution de la commande.

Selon un mode de mise en oeuvre de la présente invention, la vérification est considérée comme ayant réussi quand la commande se termine sans avoir été affectée.

Selon un mode de mise en oeuvre de la présente invention, la vérification est considérée comme ayant échoué dès qu'un état obtenu n'est pas un état autorisé.

Selon un mode de mise en oeuvre de la présente invention, l'affectation de chaque exécution consiste à interrompre la commande avant l'opération d'écriture choisie.

Selon un mode de mise en oeuvre de la présente invention, l'affectation de chaque exécution consiste à forcer l'écriture d'une donnée incohérente, par l'opération d'écriture choisie.

Selon un mode de mise en oeuvre de la présente invention, après chaque interruption, l'état de la donnée dans la mémoire non volatile est comparé à au moins un état autorisé prédéterminé.

Selon un mode de mise en oeuvre de la présente invention, le procédé est reproduit pour plusieurs commandes principales différentes, choisies pour être représentatives du fonctionnement de l'élément électronique.

Selon un mode de mise en oeuvre de la présente invention, l'élément électronique est une carte à puce.

L'invention prévoit également un système de vérification de l'atomicité d'au moins une commande principale exécutée par un élément électronique de type carte à puce.

L'invention prévoit également un élément électronique équipé d'un microcontrôleur comprenant au moins une mémoire non volatile réinscriptible, et un jeu d'instructions exécutables comprenant une commande d'affectation d'une commande principale comportant plusieurs opérations d'écriture dans la mémoire non volatile, ladite commande d'affectation ayant comme paramètre au moins un rang d'écriture dans la commande principale et ayant pour effet, soit d'interrompre la commande principale avant l'écriture du rang fixé par ledit paramètre, soit de forcer l'écriture d'une donnée incohérente lors de l'écriture du rang considéré.

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
les figures 1, 2A et 2B qui ont été décrites précédemment sont destinées à exposer l'état de la technique et le problème posé ; et
la figure 3 représente, de façon très schématique et sous forme de blocs, un mode de mise en oeuvre du procédé de vérification du caractère atomique de commandes exécutées par un microprocesseur selon la présente invention.

Les mêmes éléments ont été désignés par les mêmes références aux différentes figures. Pour des raisons de clarté, seuls les éléments et étapes qui sont nécessaires à la compréhension de l'invention ont été représentés aux figures et seront décrits par la suite. En particulier, les commandes exécutées par le microcontrôleur n'ont pas été détaillées, l'invention étant compatible avec n'importe quelle commande classique pourvu qu'elle comprenne au moins une instruction de mise à jour d'une donnée en mémoire non-volatile.

Une caractéristique de la présente invention est de sélectionner, dans l'exécution par un microcontrôleur d'une transaction dont on souhaite vérifier l'atomicité, des instants d'interruptions choisis pour être particulièrement sensibles.

L'invention tire son origine d'une analyse des étapes ou instructions critiques d'une transaction en terme de respect de son caractère atomique.

L'inventeur a constaté que, dans un microcontrôleur dont on souhaite qu'il respecte un critère d'atomicité des transactions, les étapes critiques sont en fait les instants d'écriture dans la mémoire non volatile. En effet, si l'écriture n'a pas encore eu lieu, la ou les données n'ont pas été mises à jour et les procédures de récupération d'atomicité prendront, a priori sans difficulté, la ou les valeurs initiales des variables. Si par contre, la ou les données ont déjà été mises à jour, ces procédures de récupération d'atomicité prendront, a priori sans difficulté, la ou les valeurs finales. Par contre, les instants critiques sont ceux où le microprocesseur (unité centrale 4, figure 1) écrit dans la mémoire non volatile.

Un avantage qui ressort déjà de cette sélection particulière des instants de test est un gain de temps considérable dans l'exécution du test. En effet, les instants d'écriture en mémoire non volatile ne représentent généralement que quelques pourcents du temps d'exécution de la commande.

Selon la présente invention, le test consiste à exécuter plusieurs fois une même transaction ou commande au sein de laquelle s'effectue au moins une mise à jour d'une donnée dans la mémoire non volatile associée au microprocesseur. A chaque exécution de cette commande, elle est interrompue à un instant différent de son déroulement et on compare l'état de la donnée dans la mémoire non volatile par rapport à des états autorisés (considérés comme logiquement cohérents) prédéterminés. La cohérence des états du point de vue de l'atomicité correspond soit à des valeurs prédéterminées, soit à une cohérence logique (par exemple, qu'il s'agisse bien d'une date, d'une valeur monétaire entière, etc.).

Par exemple, dans une carte à puce appliquée à un porte-monnaie électronique, une variable contenue dans un élément de mémoire non volatile est le compteur contenant la balance (solde) du porte monnaie électronique. Dans ce cas, les états cohérents pour la donnée constituée par la valeur du compteur sont les balances avant et après transaction susceptibles d'être prises par le compteur.

En reprenant l'exemple du porte-monnaie électronique, une autre variable peut être concernée par l'atomicité. Il s'agit d'un numéro de transaction qui doit être mis à jour de manière cohérente avec la balance. Les deux états cohérents sont alors les couples ancien numéro - ancienne balance et nouveau numéro - nouvelle balance.

Selon la présente invention, le jeu d'instructions de l'élément électronique comprend une commande spécifique d'affectation dédiée au test effectué par l'invention. Cette commande consiste en une commande affectant une mise à jour d'une donnée dans la mémoire non-volatile. Cette commande d'affectation est exécutée avant le lancement d'une commande principale comportant au moins une instruction d'écriture d'une donnée dans la mémoire non volatile. On fera par la suite référence à une commande principale pour désigner une ou plusieurs commandes manipulant une ou plusieurs données de la mémoire non volatile et qui doit globalement respecter un caractère atomique. La commande spécifique a pour rôle d'affecter une écriture soit en interrompant le traitement de la commande principale juste avant cette écriture, soit en écrivant une donnée incohérente à la place de la donnée prévue. Ainsi, la commande d'affectation comporte au moins un paramètre indicateur du numéro (rang) de l'écriture à affecter de la commande principale.

L'invention sera décrite par la suite en relation avec une commande interrompant la commande principale avant une écriture dont le rang depuis le début de la commande principale est identifié par le paramètre de la commande d'affectation. Tout ce qui sera décrit se transpose sans difficulté au cas où une donnée incohérente est écrite dans la mémoire plutôt que d'empêcher cette écriture. La seule différence est que la commande d'affectation a alors un paramètre supplémentaire contenant la donnée incohérente à écrire. En variante, cette donnée incohérente est générée par la carte, le cas échéant en fonction de l'état d'un paramètre de la commande d'affectation.

Pour simplifier, l'invention sera décrite en relation avec l'écriture d'une donnée, sachant que tout ce qui sera décrit s'applique également à l'écriture de plusieurs données, dont le nombre dépend de la commande exécutée.

Selon un mode de mise en oeuvre préféré, la commande principale est exécutée plusieurs fois avec, à chaque fois, un paramètre de rang différent de la commande d'affectation, le paramètre de rang étant initialisé à un, puis incrémenté d'un en un à chaque exécution de la commande d'affectation (donc de la commande principale). Après chaque interruption, la carte à puce exécute sa commande classique de récupération d'atomicité. La cohérence de la donnée dans la mémoire non volatile est alors vérifiée. Si la cohérence est respectée, le paramètre de rang est incrémenté et la commande d'affectation est de nouveau exécutée. Par contre, si la cohérence n'est pas respectée, un traitement d'erreur (en lui-même classique) est mis en oeuvre.

Dans le cas où la commande principale se termine sans avoir été interrompue, cela signifie que le caractère atomique est respecté pour la commande principale considérée. En effet, cela signifie que toutes les étapes d'écriture ont été interrompues (dans les boucles précédentes) et que des données cohérentes ont pu être récupérées à chaque fois.

Ainsi, un avantage de la présente invention est qu'elle permet de valider le caractère atomique de l'exécution d'une commande principale de façon positive et non par défaut. De plus, la fin de la vérification pour une commande donnée est automatique. En particulier, il n'est pas nécessaire de connaître à l'avance le nombre d'écritures mises en oeuvre par cette commande. Quand le paramètre de la commande d'affectation est tel qu'il permet que la commande principale se termine, cela signifie que la commande principale est fiable, toutes ses écritures ayant été testées.

Un appareil de test utilisable selon l'invention est n'importe quel appareil informatique susceptible d'échanger des informations avec l'élément électronique à tester. Par exemple, il s'agira d'un lecteur de cartes à puce, équipé d'un programme de test particulier.

L'invention sera décrite par la suite avec un exemple d'application aux cartes à puce. On notera toutefois qu'elle s'applique quel que soit l'élément électronique testé pourvu que celui-ci possède une unité centrale de traitement et au moins une mémoire non volatile.

La vérification effectuée par l'invention est, de préférence, réalisée sur un produit pilote avant toute production en série, le cas échéant en simulation. Ce test peut également être effectué sur une carte à puce test, par exemple, une carte à puce prélevée dans chaque lot de fabrication, pourvu que la commande d'affectation soit présente dans le produit final.

La sélection des commandes principales testées dépend de l'application à laquelle est destinée la carte à puce. On cherche à tester des commandes constituant des cas représentatifs du fonctionnement de cette carte. Par exemple, on pourra s'inspirer des commandes ou transactions considérées comme représentatives dans les tests fonctionnels effectués sur les cartes à puce du type considéré. De tels tests sont parfaitement courants et consistent à vérifier le fonctionnement correct des commandes d'une carte à puce.

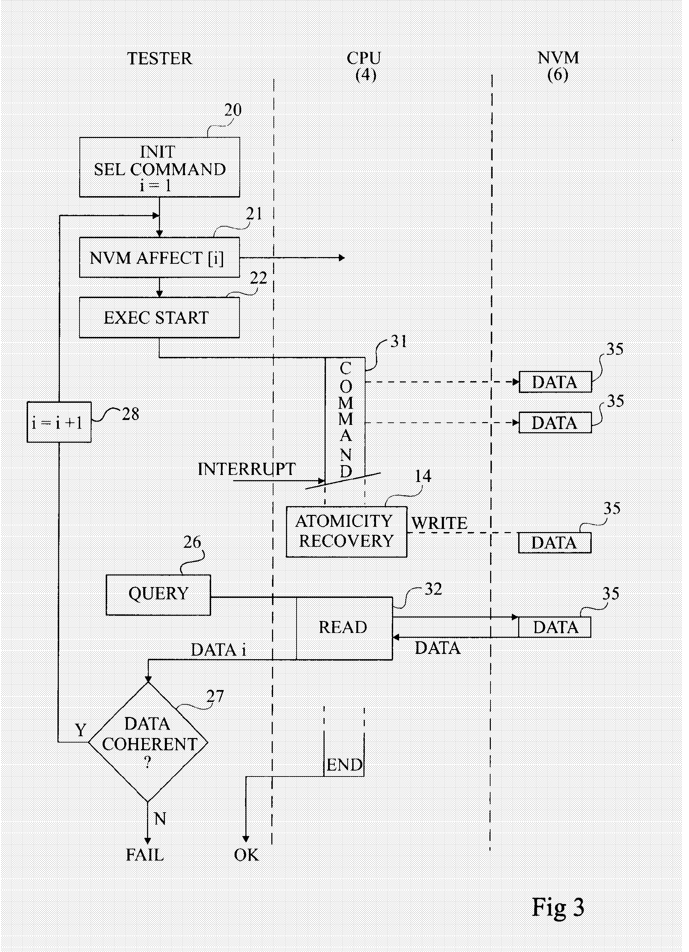

La figure 3 illustre, sous forme de blocs, un mode de mise en oeuvre du procédé de vérification de l'invention. Cette figure illustre les étapes mises en oeuvre dans une application du procédé de l'invention respectivement côté appareil testeur (TESTER), côté unité centrale 4 (CPU) de l'élément électronique (par exemple, la carte à puce) et côté mémoire non volatile 6 (NVM).

Selon l'invention, le procédé de test commence par une étape d'initialisation (bloc 20, INIT) au cours de laquelle on sélectionne la commande principale à tester et on initialise le paramètre i de la commande d'affectation à un.

Une fois cette initialisation terminée, le procédé de l'invention exécute la commande d'affectation (bloc 21, NVMAFFECT[i]) qui consiste à surveiller le déroulement de la commande principale pour détecter ses instants d'écriture et être en mesure d'interrompre l'exécution avant l'écriture de rang i. Cette commande est en pratique envoyée à l'unité centrale 4 pour qu'elle soit en mesure d'affecter l'exécution de la commande principale.

Le testeur envoie alors, à destination de la carte à puce (bloc 22, EXEC START), une instruction de début d'exécution de la commande considérée (bloc 31, COMMAND). Pendant l'exécution de la commande, des écritures WRITE dans la mémoire NVM (bloc 35, DATA) se produisent à des instants inconnus. Toutefois, dès que l'écriture de rang i doit se produire, le microprocesseur de la carte déclenche une interruption INTERRUPT de la commande.

Par exemple, l'exécution de la commande NVMAFFECT[i] provoque l'initialisation d'un compteur dans la carte avec une valeur i. A chaque écriture WRITE, l'unité centrale 4 de la carte décrémente ce compteur puis teste sa valeur courante par rapport à zéro. Tant que la valeur du compteur n'est pas nulle, l'unité centrale 4 revient à l'exécution de la commande principale jusqu'à l'écriture suivante incluse. Dès que le compteur est nul, l'unité centrale 4 provoque l'interruption INTERRUPT. En variante, l'interruption est remplacée par l'écriture d'une donnée incohérente.

Comme elle est déclenchée par la carte, il s'agit d'une interruption logicielle et non d'une coupure de l'alimentation. Suite à cette interruption, le microprocesseur déclenche une procédure de récupération d'atomicité. La carte effectue de façon classique une procédure (bloc 14, ATOMICITY RECOVERY) de récupération de l'atomicité de la commande. Si nécessaire, cette procédure conduit à une écriture (WRITE) partielle ou totale dans la mémoire non volatile NVM d'une donnée (bloc 35, DATA).

Après un intervalle de temps choisi pour laisser le temps à la carte de terminer sa procédure 14, le testeur envoie une requête (bloc 26, QUERY) d'interrogation de la ou des variables dont l'atomicité doit être préservée par l'exécution de la commande. L'intervalle de temps entre les blocs 25 et 26 est, soit fixé par le testeur pour être supérieur à la durée maximale d'une réinitialisation avec récupération d'atomicité côté carte, soit déclenché après que la carte ait envoyé au testeur un signal indicateur d'une fin de procédure de récupération d'atomicité. Suite à la requête 26, la carte (plus précisément son unité centrale 4) exécute une instruction de lecture (bloc 32, READ) de la ou des variables concernées dans la mémoire NVM (bloc 35, DATA). Dans l'exemple de la figure 3, cela consiste en une lecture du bloc 35 qui renvoie une valeur DATA.

Quand le testeur reçoit la donnée DATA, il vérifie (bloc 27, DATA COHERENT ?) sa cohérence du point de vue du respect de l'atomicité. Si la donnée DATA n'est pas cohérente (N), le testeur fournit un indicateur de défaut (FAIL) signifiant que la carte à puce n'est pas capable de récupérer l'atomicité de la commande de façon fiable. Par contre, si la donnée DATA est cohérente, le testeur incrémente (bloc 28, i = i+1) le rang i de l'écriture à laquelle doit être déclenchée l'interruption, et revient au bloc 21 d'exécution de la commande d'affectation sur le nouveau rang. Les étapes décrites ci-dessus à partir de l'étape 21 sont réexécutées avec ce nouveau paramètre.

La détermination de la fin du test pour la commande principale en cours est automatique. En effet, dès que le rang i est supérieur au nombre d'écritures de cette commande principale, il n'y a pas d'interruption et la commande se termine (END) et provoque la sortie OK de la boucle du programme de test. La fin d'une commande quelconque est aisément détectable par un microprocesseur. Dès que le programme de test se termine par une sortie de boucle liée à la fin de la commande principale, on considère que la commande principale testée est fiable du point de vue de son atomicité.

Un avantage de la présente invention est qu'elle permet de vérifier le caractère atomique d'une commande exécutée par un microprocesseur sans qu'il soit nécessaire de connaître les détails d'implémentation de cette commande et notamment ses instants d'écriture dans la mémoire non volatile.

Un autre avantage de l'invention est qu'elle permet une sortie positive (fin de commande principale = commande fiable) du programme de vérification.

Un autre avantage de l'invention est qu'elle minimise le nombre d'essais à effectuer pour vérifier l'atomicité des transactions de la carte à puce.

Bien entendu, la présente invention est susceptible de diverses variantes et modifications qui apparaîtront à l'homme de l'art. En particulier, la mise en oeuvre pratique de l'invention par des moyens logiciels est à la portée de l'homme du métier à partir des indications fonctionnelles données ci-dessus. De même, la détermination des commandes représentatives pour une application donnée est à la portée de l'homme du métier à partir des indications données ci-dessus et en s'inspirant, par exemple, des commandes considérées comme représentatives dans des tests fonctionnels pour cette application.

## Revendications

1. Procédé de vérification du caractère atomique d'au moins une commande exécutée par un microprocesseur (4) d'un élément électronique (2) comprenant au moins une mémoire non volatile réinscriptible (6), **caractérisé en ce qu'**il consiste à :
choisir (20) une commande principale (31) incluant au moins une mise à jour d'au moins une donnée (DATA) impliquant plusieurs opérations d'écriture dans la mémoire non volatile ;
exécuter (22) plusieurs fois cette commande ;
affecter (INTERRUPT) chaque exécution dans une des opérations d'écriture, en choisissant une opération différente à chaque fois ; et
vérifier (27), après chaque affectation, la cohérence de la donnée dans la mémoire non volatile par rapport à au moins un état autorisé prédéterminé.

2. Procédé selon la revendication 1, dans lequel l'étape de vérification (27) est effectuée à l'issue d'un processus de récupération d'atomicité (14) mis en oeuvre par le microprocesseur (4).

3. Procédé selon la revendication 1 ou 2, dans lequel les opérations d'écritures affectées sont choisies successivement dans l'ordre de leur apparition dans l'exécution de la commande.

4. Procédé selon la revendication 3, dans lequel la vérification est considérée comme ayant réussi quand la commande se termine sans avoir été affectée.

5. Procédé selon l'une quelconque des revendications 1 à 4, dans lequel la vérification est considérée comme ayant échoué dès qu'un état (DATA) obtenu n'est pas un état autorisé.

6. Procédé selon l'une quelconque des revendications 1 à 5, dans lequel l'affectation de chaque exécution consiste à interrompre la commande avant l'opération d'écriture choisie.

7. Procédé selon l'une quelconque des revendications 1 à 5, dans lequel l'affectation de chaque exécution consiste à forcer l'écriture d'une donnée incohérente, par l'opération d'écriture choisie.

8. Procédé selon l'une quelconque des revendications 1 à 7, dans lequel, après chaque interruption, l'état de la donnée (DATA) dans la mémoire non volatile (6) est comparé à au moins un état autorisé prédéterminé.

9. Procédé selon l'une quelconque des revendications 1 à 8, reproduit pour plusieurs commandes principales différentes, choisies pour être représentatives du fonctionnement de l'élément électronique.

10. Procédé selon l'une quelconque des revendications 1 à 9, dans lequel l'élément électronique est une carte à puce (1).

11. Système de vérification de l'atomicité d'au moins une commande principale exécutée par un élément électronique (1) de type carte à puce, **caractérisé en ce qu'**il comporte les moyens pour mettre en oeuvre le procédé conforme à l'une quelconque des revendications 1 à 10.

12. Elément électronique équipé d'un microcontrôleur comprenant au moins une mémoire non volatile réinscriptible (6), **caractérisé en ce qu'**il comporte un jeu d'instructions exécutables comprenant une commande d'affectation (NVMAFFECT) d'une commande principale comportant plusieurs opérations d'écriture dans la mémoire non volatile, ladite commande d'affectation ayant comme paramètre au moins un rang (i) d'écriture dans la commande principale et ayant pour effet, soit d'interrompre la commande principale avant l'écriture du rang fixé par ledit paramètre, soit de forcer l'écriture d'une donnée incohérente lors de l'écriture du rang considéré.

13. Elément électronique selon la revendication 12, comportant des moyens pour mettre en oeuvre le procédé selon l'une quelconque des revendications 1 à 10.
